(19) Europäisches Patentamt / European Patent Office / Office européen des brevets

(11) **EP 2 634 447 B1**

(12) **FASCICULE DE BREVET EUROPEEN**

(45) Date de publication et mention de la délivrance du brevet:
**01.04.2020 Bulletin 2020/14**

(21) Numéro de dépôt: **13156429.6**

(22) Date de dépôt: **22.02.2013**

(51) Int Cl.:
*F16D 66/00* *(2006.01)*     *F16D 55/38* *(2006.01)*
*F16D 121/24* *(2012.01)*     *F16D 125/40* *(2012.01)*
*F16D 125/48* *(2012.01)*

(54) **FREIN ÉLECTRIQUE DE ROUE D'AÉRONEF COMPORTANT UN ACTIONNEUR ÉLECTROMÉCANIQUE ÉQUIPÉ D'UN CAPTEUR DE TEMPÉRATURE.**

ELEKTRISCHE BREMSE FÜR RAD EINES LUFTFAHRZEUGS, DAS MIT EINEM ELEKTROMECHANISCHEN STELLGLIED MIT EINEM TEMPERATURSENSOR AUSGESTATTET IST

AN ELECTRIC BRAKE FOR AN AIRACRAFT WHEEL, THE BRAKE INCLUDING AN ELECTROMECHANICAL ACTUATOR FITTED WITH A TEMPERATURE SENSOR.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2012 FR 1251954**

(43) Date de publication de la demande:
**04.09.2013 Bulletin 2013/36**

(73) Titulaire: **Safran Landing Systems**
**78140 Vélizy-Villacoublay (FR)**

(72) Inventeurs:
• **Selles, Franck**
**78140 VELIZY-VILLACOUBLAY (FR)**
• **Vaney, Jean-Baptiste**
**78140 VELIZY-VILLACOUBLAY (FR)**
• **Colin, Emmanuel**
**78140 VELIZY-VILLACOUBLAY (FR)**

(74) Mandataire: **Lavialle, Bruno François Stéphane et al**
**Cabinet Boettcher**
**16, rue Médéric**
**75017 Paris (FR)**

(56) Documents cités:
EP-A1- 1 679 453      DE-A1- 19 652 230
DE-A1- 19 724 117     US-B2- 7 458 442

EP 2 634 447 B1

**Description**

L'invention concerne un frein électrique de roue d'aéronef comportant un actionneur électromécanique équipé d'un capteur de température.

ARRIERE PLAN DE L'INVENTION

Les systèmes de freinage de la plupart des aéronefs modernes comportent des freins à disques d'acier ou de carbone empilés autour d'un tube de torsion, et des actionneurs de freinage portés par une couronne et commandés pour appliquer un effort de freinage sur les disques en vue d'exercer sur les roues freinées de l'aéronef un couple de freinage tendant à ralentir celui-ci. Généralement, les roues freinées sont celles des atterrisseurs principaux des aéronefs.

On distingue les freins hydrauliques, dont les actionneurs sont alimentés par un fluide pressurisé et comportent un piston, et les freins électromécaniques, dont les actionneurs sont alimentés électriquement et comportent un moteur électrique adapté à déplacer un poussoir.

La durée nécessaire au refroidissement des disques de freins est un paramètre crucial pour définir le temps de rotation, ou TAT (pour Turn Around Time) d'un aéronef. Le TAT est le temps minimum à respecter entre deux rotations d'un aéronef, c'est-à-dire le temps pendant lequel un aéronef doit rester au sol entre un atterrissage et un décollage. Outre le refroidissement des disques de freins, de nombreux paramètres interviennent pour définir le TAT, parmi lesquels la durée nécessaire pour permettre aux passagers de quitter l'aéronef et d'y rentrer, la durée nécessaire pour remplir les réservoirs de carburant, les opérations de maintenance, etc.

Avant un décollage, il est important que la température de la pile de disques soit inférieure à une température maximale de sécurité au-dessus de laquelle les performances de freinage sont dégradées (en cas de freinage d'urgence pendant le décollage), et au dessus de laquelle il existe un risque d'incendie lorsque les atterrisseurs viennent en position rétractée dans la soute, notamment en cas de projection de fluide hydraulique sur les disques de freins.

Pour mesurer la température de la pile de disques, il est connu d'utiliser un capteur de température installé dans une cavité du tube de torsion du frein. Le capteur est alors échauffé par rayonnement et par conduction via le tube, ce qui diminue la représentativité de la mesure.

Cette incertitude sur la mesure oblige à prendre en compte une certaine marge entre la température fournie par le capteur et la température maximale de sécurité.

Cette marge a pour effet d'augmenter la durée prévue de refroidissement des freins, et donc le TAT.

Le document US 7,458,442 B2 montre un frein électrique d'après le préambule de la revendication 1.

OBJET DE L'INVENTION

Le but de l'invention est de proposer un frein électrique de roue d'aéronef équipé d'un capteur de température permettant de réduire le TAT.

RESUME DE L'INVENTION

En vue de la réalisation de ce but, on propose un frein électrique de roue d'aéronef comportant :

- un support formé d'un tube de torsion et d'un porte-actionneur ;
- une pile de disques montés autour du tube de torsion ;
- des actionneurs électromécaniques portés par le porte-actionneur, chaque actionneur comportant un moteur électrique et un poussoir, le moteur électrique étant adapté à déplacer le poussoir en regard de la pile de disques pour appliquer sélectivement un effort de freinage sur la pile de disques ;
- des moyens de mesure d'une température représentative d'une température régnant dans la pile de disques.

Selon l'invention, les moyens de mesure de température comportent au moins un capteur de température disposé dans le poussoir d'un des actionneurs électromécaniques de sorte à se trouver à proximité immédiate de la pile de disques quand le poussoir est amené au contact de celle-ci.

Ainsi, lorsque le poussoir vient en contact avec un disque de la pile de disques, la température de la pile de disques est mesurée au plus près des disques, et la chaleur est transmise au capteur par conduction. Cette mesure est ainsi plus représentative de la température des disques, et permet ainsi de baisser les marges de température prises pour déterminer le TAT, ce qui permet de diminuer ce dernier.

L'invention a aussi pour objet un actionneur électromécanique spécialement adapté pour être monté dans un frein électrique tel que défini ci-dessus.

L'invention a également pour objet un procédé de mise en œuvre d'un frein électrique tel que décrit ci-dessus, comportant les étapes :

- de déplacer le poussoir jusqu'à ce qu'il soit en contact avec un disque de la pile de disques ;
- d'acquérir une mesure de température au moyen du capteur de température logé dans le poussoir.

La mesure de température de la pile de disques est donc accessible au pilote et aux systèmes embarqués de l'aéronef :

- lorsque l'aéronef est en phase de freinage,
- lorsque l'aéronef est en vol, en faisant venir un poussoir équipé au contact des disques,

- lorsque l'aéronef est au sol à l'arrêt, et que le pilote actionne le frein de sorte que le poussoir vienne en contact avec la pile de disques.

L'invention a enfin pour objet un procédé de mesure de température de la pile de disques d'un frein électrique tel que celui décrit ci-dessus, le frein étant muni de plusieurs capteurs de température logés dans un ou des poussoirs, comportant les étapes :

- d'acquérir des mesures fournies par les capteurs de température en faisant venir au contact des disques les poussoirs portant lesdits capteurs de température;
- de comparer, pour chaque capteur de température, la mesure fournie par ce capteur de température et celle fournie par les autres capteurs de température ;
- de déterminer si chacune des mesures est cohérente ou non avec les autres mesures ;
- de rejeter les mesures incohérentes.

La redondance de capteurs de température, permise par la position des capteurs dans les actionneurs, garantit la robustesse de la mesure de température des disques.

BREVE DESCRIPTION DES DESSINS

L'invention sera mieux comprise à la lumière de la description qui suit en référence aux figures des dessins annexés parmi lesquelles :

- la figure 1 est une vue en coupe d'une demi-roue d'aéronef munie d'un frein électrique comportant un actionneur électromécanique de l'invention,
- la figure 2 est une vue en coupe longitudinale d'un actionneur électromécanique de l'invention.

DESCRIPTION DETAILLEE DE L'INVENTION

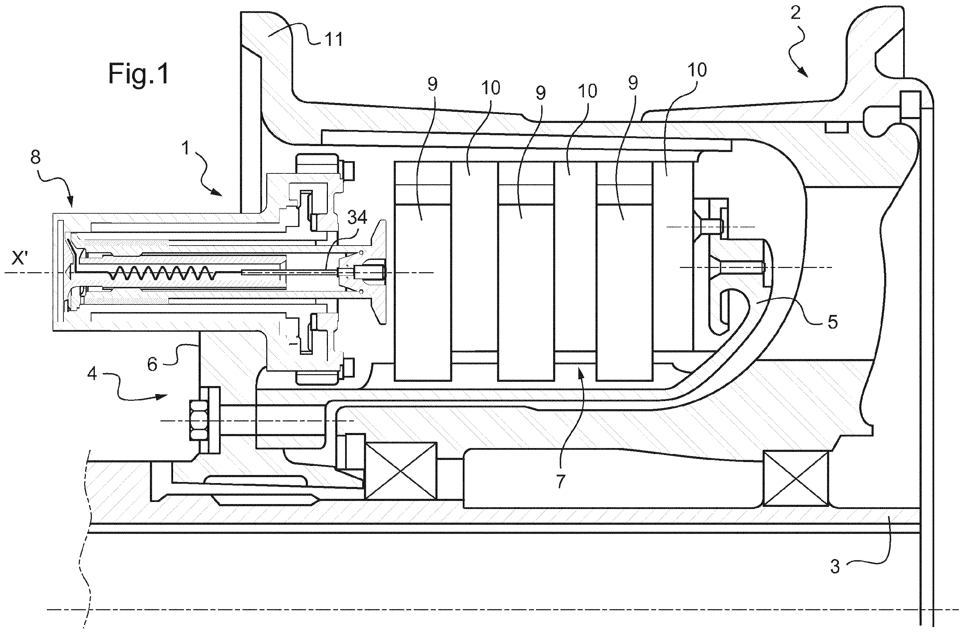

Le frein électrique 1, visible à la figure 1, est destiné à freiner une roue 2 d'aéronef montée sur un essieu 3 d'axe X. Le frein électrique 1 comporte un support 4 formé d'un tube de torsion 5 et d'un porte-actionneur 6, une pile 7 de disques de carbone montés autour du tube de torsion 5, et au moins un actionneur électromécanique 8 porté par le porte-actionneur 6.

Parmi les disques de carbone, on distingue des disques stators 9 solidaires en rotation du tube de torsion 5, et des disques rotors 10, solidaires en rotation d'une jante 11 de la roue 2.

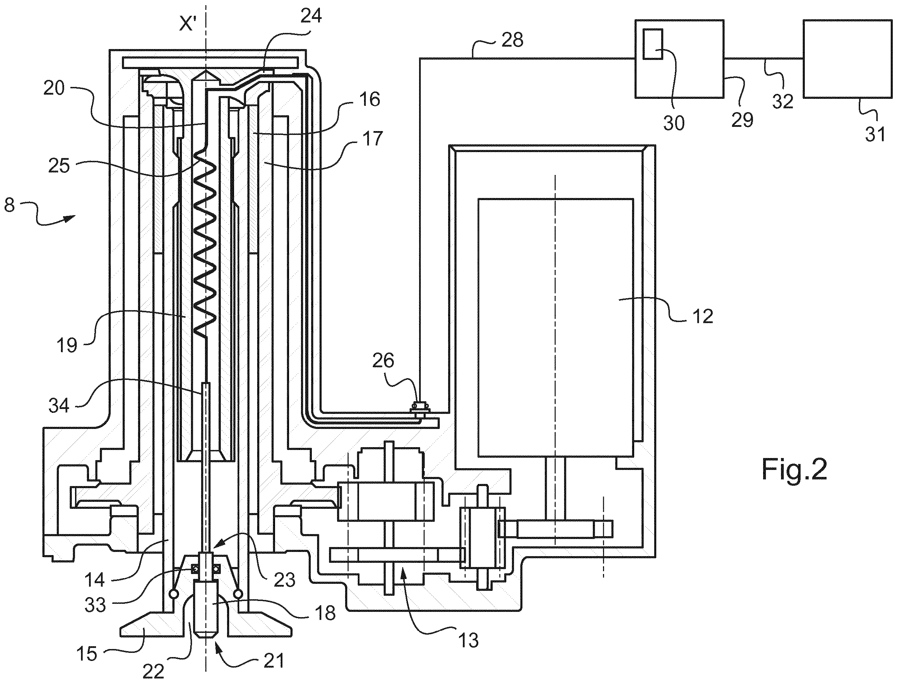

L'actionneur électromécanique 8, visible à la figure 2, comporte un poussoir 14 muni d'un patin 15. Le poussoir 14 est agencé pour coulisser longitudinalement selon un axe X'. Le poussoir 14 est fileté et coopère par l'intermédiaire d'une liaison hélicoïdale équipée d'un écrou 17 monté en rotation autour de l'axe X'. L'écrou 17 est lui-même entraîné en rotation par un moteur électrique 12 par l'intermédiaire d'un réducteur 13. Une rotation du moteur 12 provoque ainsi un déplacement du poussoir 14 en regard de la pile 7 de disques pour appliquer sélectivement sur celle-ci un effort de freinage. Le poussoir 14 est empêché de tourner par coopération avec une tige centrale 19 cannelée. Tout ceci est bien connu et n'est rappelé que pour donner le contexte de l'invention.

Selon l'invention, l'actionneur électromécanique 8 comporte un capteur de température, ici une sonde thermocouple 18, à laquelle est fixée une gaine de protection 34. La sonde 18 est montée dans le patin 15 du poussoir 14.

La sonde 18, ici une sonde thermocouple de type K, comporte deux fils 20, un fil Chromel et un fil Alumel, représentés aux figures 1 et 2 par un trait épais unique. Les fils 20 sont reliés par une jonction appelée « soudure chaude ». La soudure chaude, qui est la partie sensible de la sonde 18, est située à l'intérieur de la sonde 18 au niveau d'une première extrémité 21 de la sonde 18. Cette première extrémité 21 de la sonde 18 s'étend dans une cavité 22 du patin 15, de sorte que la soudure chaude soit à proximité immédiate du disque stator avant 9 de la pile 7 de disques lorsque l'effort de freinage est appliqué.

Un joint d'étanchéité 33, situé au niveau d'une seconde extrémité 23 de la sonde 18, permet d'éviter l'introduction à l'intérieur de l'actionneur d'éléments extérieurs comme par exemple de l'eau ou de la poussière de carbone.

A la sortie de la sonde 18, les fils 20 s'étendent dans la gaine de protection 34. La gaine 34 est fixée au niveau de la seconde extrémité 23 de la sonde 18, et s'étend longitudinalement dans le poussoir 14 selon l'axe X' à l'intérieur de la tige 19. A la sortie de la gaine 34, les fils 20 cheminent à travers l'actionneur électromécanique 8, dans le poussoir 14 puis dans un conduit 24 creusé dans le corps de l'actionneur 8. Une surlongueur 25 de fil est prévue pour permettre une translation du poussoir 14 sans contraindre les fils 20 lorsque le poussoir 14 coulisse vers la pile 7 de disques pour appliquer un effort de freinage, ou au contraire, coulisse dans l'autre sens pour éloigner le patin 15 de la pile 7 de disques.

Les fils 20 sont ensuite reliés à un connecteur électrique 26 de l'actionneur 8. Ce connecteur 26 permet de connecter les fils 20 à des fils 28 reliant l'actionneur 8 à un équipement déporté 29 situé sur un atterrisseur sur lequel est fixé l'essieu 3 ou dans une autre partie de l'aéronef. Les fils 28 sont représentés à la figure 2 par un trait unique. L'équipement déporté 29 comporte un deuxième capteur de température 30, par exemple une thermorésistance.

Les fils 20 de la sonde 18, ainsi que les fils 28, sont de type Chromel/Alumel jusqu'à l'équipement déporté 29. La jonction entre ces fils et l'équipement déporté 29 est appelée « soudure froide » du thermocouple.

Le deuxième capteur de température 30 est adapté à mesurer la température T2 de la soudure froide.

Un organe électrique 31 acquiert :

- la différence de potentiel entre le point de soudure chaude et le point de soudure froide, ce qui permet d'estimer la différence de température ΔT entre la soudure chaude et la soudure froide,
- la température T2 de la soudure froide.

De ces valeurs, l'organe électrique 31 déduit la température T1 du frein 1 :

$$T1 = \Delta T + T2.$$

On note que des fils 32 reliant l'équipement déporté 29 et l'organe électrique 31, et destinés à transmettre un signal provenant de la sonde 18 à l'organe électrique 31, sont des fils de cuivre et non plus des fils Chromel/Alumel.

La mesure de température de la pile de disques est donc accessible au pilote et aux systèmes embarqués de l'aéronef :

- lorsque l'aéronef est en phase de freinage,
- lorsque l'aéronef est en vol, en faisant venir un poussoir équipé au contact des disques,
- lorsque l'aéronef est au sol à l'arrêt, et que le pilote actionne le frein de sorte que le poussoir vienne en contact avec la pile de disques.

Dans le cas où le frein électrique 1 comporte plusieurs actionneurs électromécaniques 8, il est avantageux de munir chaque actionneur d'une sonde 18. Cette redondance permet de garantir la disponibilité de la mesure même en cas de panne d'une sonde.

Cette redondance permet en outre de rendre le système beaucoup plus résistant à des cas de pannes dans lesquels des données dites « erronées mais crédibles » sont transmises. Ces données sont des données fausses, résultant d'une panne permanente ou temporaire d'un capteur, mais contenues dans une gamme de mesure plausible, ce qui rend difficile la détection de la panne. Pour rendre plus robuste la mesure en éliminant ce type de panne, il est possible d'appliquer un procédé consistant à comparer entre elles les valeurs fournies par les différents capteurs de température, et à éliminer les valeurs incohérentes. Cette comparaison peut être réalisée par l'organe électrique 31.

Le procédé pour rendre plus robuste la mesure comporte les étapes :

- d'acquérir des mesures fournies par les capteurs de température 18 en faisant venir au contact des disques les poussoirs 14 portant lesdits capteurs de température 18;
- de comparer, pour chaque capteur de température, la mesure fournie par ce capteur de température et celle fournie par les autres capteurs de température 18 ;
- de déterminer si chacune des mesures est cohérente ou non avec les autres mesures ;
- de rejeter les mesures incohérentes.

On pourra prévoir d'utiliser, en secours ou en complément, un capteur de température situé ailleurs que dans un actionneur, par exemple dans le tube de torsion. Par exemple, lorsque le procédé pour rendre plus robuste la mesure est appliqué et que le frein ne comporte que deux capteurs de température situés dans deux actionneurs fournissant des mesures incohérentes, on pourra choisir d'éliminer les données de ces capteurs et d'utiliser un capteur de température de secours.

L'invention n'est pas limitée au mode de réalisation particulier qui vient d'être décrit, mais, bien au contraire, couvre toute variante entrant dans le cadre de l'invention tel que défini par les revendications.

Bien que l'on ait décrit un actionneur comportant un unique capteur de température, il est possible de munir un actionneur de plusieurs capteurs de température. Dans ce cas, il est possible d'adapter le procédé d'amélioration de la robustesse de la mesure à plusieurs capteurs d'un même actionneur ou à l'ensemble des capteurs du frein.

Bien que l'on ait défini un organe électrique et un équipement déporté contenant la soudure froide, il possible que l'organe électrique contienne la soudure froide. Dans ce cas, les fils du capteur seront de type Chromel/Alumel jusqu'à l'organe électrique.

Enfin, il est possible que le patin du poussoir vienne en contact non pas directement avec un disque stator mais avec une plaque de contact fixée au disque stator le plus proche du patin, ou bien fixée au tube de torsion et positionnée entre le patin et le disque stator le plus proche du patin.

## Revendications

1. Frein électrique de roue d'aéronef comportant :

    - un support (4) qui peut être formé d'un tube de torsion (5) et d'un porte-actionneur (6) ;
    - une pile (7) de disques montés autour du tube de torsion (5) ;
    - au moins un actionneur électromécanique (8) porté par le porte-actionneur (6), chaque actionneur comportant un moteur électrique (12) et un poussoir (14), le moteur électrique (12) étant adapté à déplacer le poussoir (14) en regard de la pile (7) de disques pour appliquer sélectivement un effort de freinage sur la pile (7) de disques ;
    - des moyens de mesure d'une température représentative d'une température régnant dans la pile (7) de disques ;

**caractérisé en ce que** les moyens de mesure de température comportent au moins un capteur de température (18) disposé dans le poussoir (14) d'un des actionneurs électromécaniques (8) de sorte à se trouver à proximité immédiate de la pile (7) de disques quand le poussoir (14) est amené au contact de celle-ci.

2. Frein électrique selon la revendication 1, dans lequel chaque actionneur (8) est équipé d'un capteur de température (18) disposé dans le poussoir (14).

3. Actionneur électromécanique spécialement adapté pour être monté dans un frein électrique comportant une pile de disques selon l'une des revendications 1 ou 2, comportant :

   - un poussoir (14) ;
   - un moteur électrique (12) adapté à déplacer le poussoir en regard de la pile (7) de disques du frein pour appliquer sélectivement un effort de freinage sur la pile (7) de disques ;
   **caractérisé en ce que** le poussoir (14) comporte au moins un capteur de température (18) disposé dans le poussoir (14) de sorte à se trouver à proximité immédiate de la pile (7) de disques quand le poussoir (14) est amené au contact de celle-ci.

4. Actionneur électromécanique selon la revendication 3, dans lequel au moins un capteur de température (18) est une sonde thermocouple.

5. Procédé de mise en œuvre d'un frein électrique selon l'une des revendications 1 à 2, comportant les étapes :

   - de déplacer le poussoir (14) jusqu'à ce qu'il soit en contact avec un disque de la pile (7) de disques ;
   - d'acquérir une mesure de température au moyen du capteur de température (18) logé dans le poussoir (14).

6. Procédé de mesure de température de la pile (7) de disques d'un frein électrique selon la revendication 1, le frein étant muni de plusieurs capteurs de température (18) logés dans un ou des poussoirs (14), comportant les étapes :

   - d'acquérir des mesures fournies par les capteurs de température (18) en faisant venir au contact des disques les poussoirs (14) portant lesdits capteurs de température (18);
   - de comparer, pour chaque capteur de température (18), la mesure fournie par ce capteur de température (18) et celle fournie par les autres capteurs de température (18) ;

   - de déterminer si chacune des mesures est cohérente ou non avec les autres mesures ;
   - de rejeter les mesures incohérentes.

## Patentansprüche

1. Elektrische Bremse für ein Luftfahrzeugrad, umfassend:

   - einen Träger (4), der aus einem Torsionsrohr (5) und einem Aktorträger (6) gebildet werden kann;
   - einen Stapel (7) von Scheiben, die um das Torsionsrohr (5) herum montiert sind;
   - mindestens einen elektromechanischen Aktor (8), der von dem Aktorträger (6) getragen wird, wobei jeder Aktor einen Elektromotor (12) und einen Stößel (14) umfasst, wobei der Elektromotor (12) geeignet ist, den Stößel (14) gegenüber dem Stapel (7) von Scheiben zu verschieben, um selektiv eine Bremskraft auf den Stapel (7) von Scheiben aufzubringen;
   - Temperaturmessmittel zum Messen einer Temperatur, die repräsentativ für eine in dem Stapel (7) von Scheiben herrschende Temperatur ist; **dadurch gekennzeichnet, dass** die Temperaturmessmittel mindestens einen Temperatursensor (18) umfassen, der in dem Stößel (14) eines der elektromechanischen Aktoren (8) derart angeordnet ist, dass er sich in unmittelbarer Nähe des Stapels (7) von Scheiben befindet, wenn der Stößel (14) mit demselben in Kontakt gebracht wird.

2. Elektrische Bremse nach Anspruch 1, bei dem jeder Aktor (8) mit einem Temperatursensor (18) ausgestattet ist, der in dem Stößel (14) angeordnet ist.

3. Elektromechanischer Aktor, der speziell angepasst ist, um in einer einen Stapel von Scheiben umfassenden elektrischen Bremse nach einem der Ansprüche 1 oder 2 montiert zu werden, umfassend:

   - einen Stößel (14);
   - einen Elektromotor (12), der geeignet ist, den Stößel gegenüber dem Stapel (7) von Scheiben der Bremse zu verschieben, um selektiv eine Bremskraft auf den Stapel (7) von Scheiben aufzubringen;
   **dadurch gekennzeichnet, dass** der Stößel (14) mindestens einen Temperatursensor (18) umfasst, der in dem Stößel (14) derart angeordnet ist, dass er sich in unmittelbarer Nähe des Stapels (7) von Scheiben befindet, wenn der Stößel (14) mit demselben in Kontakt gebracht wird.

**4.** Elektromechanischer Aktor nach Anspruch 3, bei dem mindestens ein Temperatursensor (18) eine Thermoelementsonde ist.

**5.** Verfahren zum Verwenden einer elektrischen Bremse nach einem der Ansprüche 1 bis 2, umfassend die Schritte:

- Verschieben des Stößels (14), bis er mit einer Scheibe des Staples (7) von Scheiben in Kontakt ist;
- Erfassen einer Temperaturmessung mittels des in dem Stößel (14) untergebrachten Temperatursensors (18).

**6.** Temperaturmessverfahren zum Messen der Temperatur des Stapels (7) von Scheiben einer elektrischen Bremse nach Anspruch 1, wobei die Bremse mit mehreren Temperatursensoren (18) versehen ist, die in einem oder mehreren Stößeln (14) untergebracht sind, umfassend die Schritte:

- Erfassen von Messungen, die von den Temperatursensoren (18) geliefert werden, indem man die Stößel (14), die die genannten Temperatursensoren (18) tragen, mit den Scheiben in Kontakt bringt;
- Vergleichen für jeden Temperatursensor (18) der von diesem Temperatursensor (18) gelieferten Messung und derjenigen Messung, die von den anderen Temperatursensoren (18) geliefert wird;
- Bestimmen, ob jede der Messungen mit den anderen Messungen kohärent ist oder nicht;
- Verwerfen der inkohärenten Messungen.

**Claims**

**1.** An electric brake for an aircraft wheel, the brake comprising:

· a support (4) that may be formed by a torsion tube (5) and by an actuator-carrier (6);
· a stack (7) of disks mounted around the torsion tube (5);
· at least one electromechanical actuator (8) carried by the actuator-carrier (6), each actuator comprising an electric motor (12) and a pusher (14), the electric motor (12) being adapted to move the pusher (14) facing the stack (7) of disks in order to apply a braking force selectively to the stack (7) of disks; and
· temperature measurement means for measuring a temperature representative of a temperature that exists in the stack (7) of disks;
the electric brake being **characterized in that** the temperature measurement means comprise at least one temperature sensor (18) arranged in the pusher (14) of one of the electromechanical actuators (8) so as to be located in the immediate proximity of the stack (7) of disks when the pusher (14) is brought into contact therewith.

**2.** An electric brake according to claim 1, wherein each actuator (8) is fitted with a temperature sensor (18) arranged in the pusher (14).

**3.** An electromechanical actuator specially adapted to be mounted in an electric brake including a stack of disks and in accordance with claim 1 or claim 2, the actuator comprising:

· a pusher (14); and
· an electric motor (12) adapted to move the pusher facing the stack (7) of brake disks in order to apply a braking force selectively on the stack (7) of disks;
the actuator being **characterized in that** the pusher (14) includes at least one temperature sensor (18) arranged in the pusher (14) so as to be located in the immediate proximity of the stack (7) of disks when the pusher (14) is brought into contact therewith.

**4.** An electromechanical actuator according to claim 3, wherein at least one temperature sensor (18) is a thermocouple probe.

**5.** A method of using an electric brake according to claim 1 or claim 2, the method comprising the following steps:

· moving the pusher (14) until it is in contact with a disk of the stack (7) of disks; and
· acquiring a temperature measurement by means of the temperature sensor (18) housed in the pusher (14).

**6.** A method of measuring the temperature of the stack (7) of disks in an electric brake according to claim 1, the brake being provided with a plurality of temperature sensors (18) housed in one or more pushers (14), the method comprising the following steps:

· acquiring measurements delivered by the temperature sensors (18) by causing the pushers (14) carrying said temperature sensors (18) to come into contact with the disks;
· for each temperature sensor (18), comparing the measurement delivered by that temperature sensor (18) with the measurements delivered by the other temperature sensors (18);
· determining whether each of the measurements is or is not consistent with the other measurements; and

· rejecting inconsistent measurements.

Fig.1

Fig.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7458442 B2